(19) Europäisches Patentamt

European Patent Office

Office européen des brevets

(11) **EP 0 767 760 B2**

(12) **NEUE EUROPÄISCHE PATENTSCHRIFT**

(45) Veröffentlichungstag und Bekanntmachung des Hinweises auf die Entscheidung über den Einspruch:
**24.07.2002   Patentblatt 2002/30**

(45) Hinweis auf die Patenterteilung:
**08.07.1998   Patentblatt 1998/28**

(21) Anmeldenummer: **95913038.6**

(22) Anmeldetag: **21.03.1995**

(51) Int Cl.⁷: $C03B\ 11/12$, C03B 11/16, C03B 11/00

(86) Internationale Anmeldenummer:
**PCT/DE95/00381**

(87) Internationale Veröffentlichungsnummer:
**WO 96/00193 (04.01.1996 Gazette 1996/02)**

(54) **VERFAHREN ZUR HERSTELLUNG VON GLASFORMLINGEN NACH DEM PRESSVERFAHREN SOWIE ZUR ANWENDUNG DES VERFAHRENS BESONDERS GEEIGNETE VORRICHTUNG**

METHOD OF PRODUCING GLASS MOULDINGS IN A PRESS, AND A PRESS PARTICULARLY SUITABLE FOR USE WITH THE METHOD

PROCEDE DE FABRICATION DE PIECES MOULEES EN VERRE PAR MOULAGE PAR COMPRESSION ET DISPOSITIF PARTICULIEREMENT APPROPRIE POUR LA MISE EN OEUVRE DE CE PROCEDE

(84) Benannte Vertragsstaaten:
**DE FR GB IE IT**

(30) Priorität: **27.06.1994  DE 4422053**

(43) Veröffentlichungstag der Anmeldung:
**16.04.1997   Patentblatt 1997/16**

(73) Patentinhaber: **PÖTING GMBH & CO. KG**
**40699 Erkrath (DE)**

(72) Erfinder: **PÖTING, Klaus**
**D-40699 Erkrath (DE)**

(74) Vertreter: **Palgen, Peter, Dr. Dipl.-Phys. et al**
**König-Palgen-Schumacher-Kluin**
**Patentanwälte**
**Lohengrinstrasse 11**
**40549 Düsseldorf (DE)**

(56) Entgegenhaltungen:
**US-A- 1 340 366         US-A- 1 560 062**
**US-A- 2 783 591         US-A- 3 244 497**
**US-A- 3 337 325**

• **Fachbuch "Glasmaschinen", Seiten 179, 180, Fachbuch "Glasmaschinen", Seiten 179, 180, 313, Springer Verlag, 1964 313, Springer Verlag, 1964**

EP 0 767 760 B2

**Beschreibung**

Die Erfindung bezieht sich auf ein Verfahren zur Herstellung von Glasformlingen nach dem Preßverfahren sowie auf eine Vorrichtung für die Anwendung dieses Verfahrens.

Zum Pressen von Glasformlingen finden im wesentlichen Verfahren Verwendung, bei denen unter einem konstanten Winkelabstand mehrere Preßformen auf einem drehbaren Maschinentisch angeordnet sind. Nachdem in diejenige unter einer Einrichtung zur Beschikkung, dem sogenannten Feeder, befindliche Preßform schmelzflüssiges Glas in einer vorbestimmten Menge eingefüllt wurde, wird der Maschinentisch um den Winkelabstand zweier benachbarter Preßformen gedreht, so daß diejenige mit dem frisch eingefüllten, schmelzflüssigen Glas unterhalb eines Preßstempels positioniert wird. Der Preßstempel, welcher die innere Form des Glasformlings vorgibt, wird in die Preßform hinabgesenkt und preßt das schmelzflüssige Glas in die eigentliche äußere Form hinein. Während dieses Vorgangs wird in die benachbarte Preßform, die sich nun unter dem Feeder befindet, schmelzflüssiges Glas eingefüllt. Nach der für die vollständige Ausformung des Glasformlings minimal erforderlichen Zeitdauer, die üblicherweise im Bereich von wenigen Senkunden liegt, wird der Preßstempel wieder aus der Preßform hinausgefahren und der Maschinendrehtisch wiederum um einen dem Abstand zweier benachbarter Preßformen entsprechenden Winkel weiter gedreht, und der Zyklus beginnt von vorn.

Der fertiggepreßte Glasformling verweilt so lange in seiner Preßform, bis sich dieser durch Abgabe von Strahlungswärme und vor allem durch Wärmeabfuhr über die Preßform so weit abgekühlt hat, daß dieser zu einem formstabilen Körper erstarrt ist. Die hierfür benötigte Abkühlzeit liegt im allgemeinen erheblich oberhalb der für das vollständige Ausformen benötigten Preßzeit, so daß der Glasformling für die Dauer mehrerer Zyklen in der Preßform abgekühlt werden muß. Der Maschinendrehtisch muß daher mindestens eine Anzahl von Preßformen aufweisen, daß die für den Transport von der Preßstation zu einer Entnahmestation benötigte Zeit mindestens der erforderlichen Abkühldauer entspricht. Für die Abkühldauer $t_k$ gilt:

$$t_k = (z - 1)t_p + zt_T,$$

wobei z die Anzahl der Zyklen, $t_p$ die Preßdauer sowie $t_T$ die Zeit, die der Drehtisch zur Drehung um einen dem Abstand benachbarter Preßformen entsprechenden Winkelabstand benötigt, bedeuten.

Aus der US-A-3 337 325 ist eine Glaspreßmaschine bekannt, bei der der Preßstempel nach dem eigentlichen Ausformungsvorgang solange in der Preßform ohne nennenswerten Druck verweilt, bis der Glasformling ausreichend erstarrt ist. Zusammen mit einer Einrichtung, die während des Erstarrungsvorganges die Preßform abdeckt, wird durch diese Maßnahme die Bildung von inneren Spannungen in dem Glasformling vermieden.

Die Leistungsfähigkeit derartiger Verfahren hängt demnach nicht allein von der für die Ausformung des Glasformlings benötigten Mindestpreßdauer ab, sondern wird wesentlich durch die zum Abkühlen des Glasformlings bis zu seiner ausreichenden Erstarrung notwendige Zeit begrenzt.

Es ist daher ein wesentlicher Nachteil dieser Verfahren, daß auch durch einen Einsatz aufwendigerer, wirkungsvollerer Preßantriebe, die ein schnelleres Ausformen des Glasformlings bewirken, die Leistungsfähigkeit der Verfahren nicht wesentlich erhöht werden kann.

Für das Absenken des Preßstempels in die Preßform finden üblicherweise Vorrichtungen Verwendung, bei denen der Preßstempel am vorderen Ende einer Preßstange befestigt ist, die durch einen Druckzylinder kraftbeaufschlagbar ist. Der Preßstempel wird dabei entweder in die Preßform so weit hineingedrückt, bis das gesamte zwischen dem Preßstempel und der Preßform verbliebene Volumen mit schmelzflüssigem Glas ausgefüllt ist (sogenanntes "anschlagloses Pressen") oder bis sich Preßform und Preßstempel am Ende des Preßvorganges in einer durch Anlage an einem Anschlag genau definierten gegenseitigen Stellung befinden ("Pressen auf Anschlag"). Der Druckzylinder ist üblicherweise fluidbetätigt.

Nachteilig ist bei diesem hydraulischen Antrieb, daß die für die Steuerung des Drucks in dem Hydraulikzylinder erforderliche Hydraulikanordnung durch eine Vielzahl von benötigten Regelventilen, Hydraulikleitungen, Druckpumpen usw. relativ aufwendig und damit teuer in der Herstellung sowie - insbesondere durch die bei der Glasverarbeitung herrschenden hohen Temperaturen - wartungsaufwendig ist.

Es ist die Aufgabe der Erfindung, ein Verfahren zu entwickeln, mit welchem die Leistungsfähigkeit einer Glaspreßmaschine erhöht wird, ohne daß es dazu eines wesentlich erhöhten maschinellen Aufwandes bedarf. Die Erfindung betritt auch eine Glaspreßvorrichtung die für die Durchführung dieses Verfahrens geeignet ist.

Diese Aufgabe wird durch das in Anspruch 1 wiedergegebene Verfahren und durch die in Anspruch 3 wiedergegebene Glaspreßvorrichtung gelöst.

Durch das Verweilen des Preßstempels nach dem eigentlichen Preßvorgang in Kontakt mit dem Glasformling in der Preßform findet zusätzlich zu der Wärme, die von der Außenseite des Glasformlings über die Preßform abgeführt wird, durch den Kontakt zu dem metallischen Preßstempel ein in tensiver Wärmeübergang von der Innenseite des Glasformlings auf den Preßstempel statt. Der Preßstempel bewirkt also im Vergleich zu herkömmlichen Verfahren, bei denen oft Kühlluft in das Innere des Glasformlings eingeblasen wird, eine erheblich wirksamere Kühlung der Innenseite des Glasformlings. Daher wird die Zeitspanne, die er in der Preßform verweilen muß, bis sich sein oberflächennaher Bereich auf eine solche Temperatur abgekühlt haben, daß er eine zur Entnahme aus der Preßform und zur Übergabe an eine Kühlstation ausreichende Formsteifigkeit aufweist und an eine Kühlstation übergeben wird, durch die vermieden wird, daß durch Wiederaufheizungen über die Erstarrungstemperatur des verwendeten Glases Verformungen des Glasformlings auftreten, insgesamt erheblich reduziert. Die Preßform steht somit bereits nach einer kürzeren Zeit einem erneuten Preßvorgang zur Verfügung.

Hierbei wird der Glasformling in der Kühlstation in eine seine Temperatur weiter absenkende und vergleichmäßigende Kühlform übergeben. Durch diese Maßnahme kann einerseits vermieden werden, daß der Glasformling durch partielle Aufheizung über die Erstarrungstemperatur des verwendeten Glases unerwünschte Verformungen aufweist, andererseits wirkt die durch die Kühlform erzielte Vergleichmäßigung bei einer Temperatur der Ausbildung von inneren Spannungen, die insbesondere bei einem Glasformling, dessen Form erhebliche Unterschiede in seiner Materialstärke bedingt, wirksam entgegen. Ein "Springen" des Glasformlings, d.h. eine plötzliche Rißausbildung nach seiner vollständigen Abkühlung, kann durch diese Maßnahme praktisch ausgeschlossen werden.

Die Leistungsfähigkeit des erfindungsgemäßen Verfahrens kann erhelbich erhöht werden, wenn gemäß Anspruch 2 zeitparallel in mehreren Preßformen mit einer entsprechenden Anzahl von Preßstempeln aus schmelzflüssigem Glas Glasformlinge gepreßt und den Kühlstationen übergeben werden. Dabei kann durch einen gegenüber herkömmlichen Preßverfahren relativ geringen konstruktiven Mehraufwand, der lediglich in den zusätzlich benötigten Preßstempeln besteht, die Leistungsfähigkeit über diejenige eines dieselbe Anzahl von Preßformen aufweisenden Verfahrens durch die insgesamt kürzere Verweildauer in der Preßform gesteigert werden. Der anfänglich für die Anwendung der vorteilhaften Ausführungsform des erfindungsgemäßen Verfahrens gemäß Anspruch 2 erforderliche konstruktive Mehraufwand für die zusätzlichen Preßstempel reduziert sich im Vergleich zu deren Einsatz bei herkömmlichen Preßverfahren durch ihre wesentlich erhöhte Lebensdauer, da sie während der Abkühlphase des Glasformlings selbst abgekühlt werden und damit insgesamt einer geringeren thermischen Belastung unterliegen.

Eine Glaspreßvorrichtung zur Anwendung des erfindungsgemäßen Verfahrens ist Gegenstand des Anspruchs 3. Da der Krafterzeuger, mit welchem der Preßstempel in die Preßform nach einer vorgegebenen zeitlichen Abhängigkeit von Kraft und Vorschub hineindrückbar ist als eine von einem Drehmoment- und drehzahlsteuerbaren Elektromotor angetriebene Kurvenscheibe ausgebildet ist, kann das Hineindrücken des Preßstempels schneller und mit höherer Präzision als bei herkömmlichen, hydraulisch angetriebenen Krafterzeugern erfolgen. Auch zeichnet sich der Krafterzeuger bei der erfindungsgemäßen Glaspreßvorrichtung durch einen geringen erforderlichen Wartungsaufwand und eine kostengünstige Herstellbarkeit aus. Des weiteren ist die Geräuschbelästigung während seines Betriebes gering.

Da der die Kurvenscheibe antreibende Elektromotor drehmoment- und drehzahlsteuerbar ist, können sowohl der Vorschub, mit welchem der Preßstempel in die Preßform hineingedrückt wird und die auf den Glasformling während des Preßvorganges ausgeübte Kraft auf einfache Weise den jeweiligen durch den Glasformling vorgegebenen Anforderungen angepaßt werden. Dabei kann - falls erforderlich - durch Variation des Stromes, mit dem der Elektromotor beaufschlagt wird, ein "Preßkraftprogramm" gefahren werden, d.h. die Preßkraft kann während des Preßvorganges variiert werden.

Durch die Wahl einer entsprechenden Kurvenscheibenform kann der Geschwindigkeitsverlauf des Vorschubs während des Stempelabsenkens mechanisch vorgewählt werden, so daß auch dieser an individuelle, durch den jeweiligen Glasformling bzw. durch das verwendete Glasmaterial vorgegebene Anforderungen angepaßt werden kann.

Bei einer bevorzugten Ausführungsform gemäß Anspruch 4 ist der Elektromotor ein Drehstom-Servomotor, da dieser eine besonders feinfühlige Steuerung seiner Drehzahl und des von ihm erzeugten Drehmoments erlaubt.

Hinsichtlich einer verzögerungsfreien, präzisen und wartungsarmen Kraftübertragung ist es gemäß Anspruch 5 besonders vorteilhaft, wenn die Glaspreßvorrichtung eine in ihrer Achsrichtung verschiebbar geführte, an ihrem einen Ende den Preßstempel tragende Preßstange umfaßt, gegen deren anderes Ende die Kurvenscheibe wirkt.

Eine präzise Rückführbarkeit des Preßstempels aus der Preßform ist gewährleistet, wenn gemäß Anspruch 6 zum Zurückziehen des Preßstempels eine Gegenkurvenscheibe Verwendung findet.

Versuche haben gezeigt, daß besonders gute Preßergebnisse erzielt werden, wenn die Einrichtung zum Zurückziehen des Preßstempels ein in die Preßstange entgegen der Preßrichtung kraftbeaufschlagendes elastisches Element ist (Anspruch 7). Es ist jedoch ebenfalls möglich, das Zurückziehen des Preßstempels mit Hilfe eines hydraulisch oder pneumatisch betriebenen Zylinders, einer Gegenkurvenscheibe oder eines Gegengewichts zu bewerkstelligen.

Wartungsarm und preisgünstig in seiner Herstellung ist das elastische Element dann, wenn es gemäß Anspruch 8 mindestens eine Schraubenfeder umfaßt.

In der Zeichnung ist das erfindungsgemäße Verfahren im Vergleich zu einem herkömmlichen Glaspreßverfahren sowie eine insbesondere zur Anwendung des erfindungsgemäßen Verfahrens geeignete Glaspreßvorrichtung schematisch dargestellt. Es zeigen:

Fig. 1 den zeitlichen Ablauf eines herkömmlichen Mehrstationen-Glaspreßverfahrens mit einem Preßstempel und einem drehbaren Achtformen-Maschinentisch:

Fig. 2 eine Darstellung des erfindungsgemäßen Verfahrens mit einem linearen Achtformentisch und acht Preßstempeln;

Fig. 3 eine Ausführungsform der erfindungsgemäßen, zur Anwendung des Verfahrens besonders geeigneten Glaspreßvorrichtung in einer Seitenansicht bei aus der Preßform zurückgezogenem Preßstempel sowie

Fig. 4 dieselbe Vorrichtung in derselben Ansicht, jedoch während eines Preßvorganges.

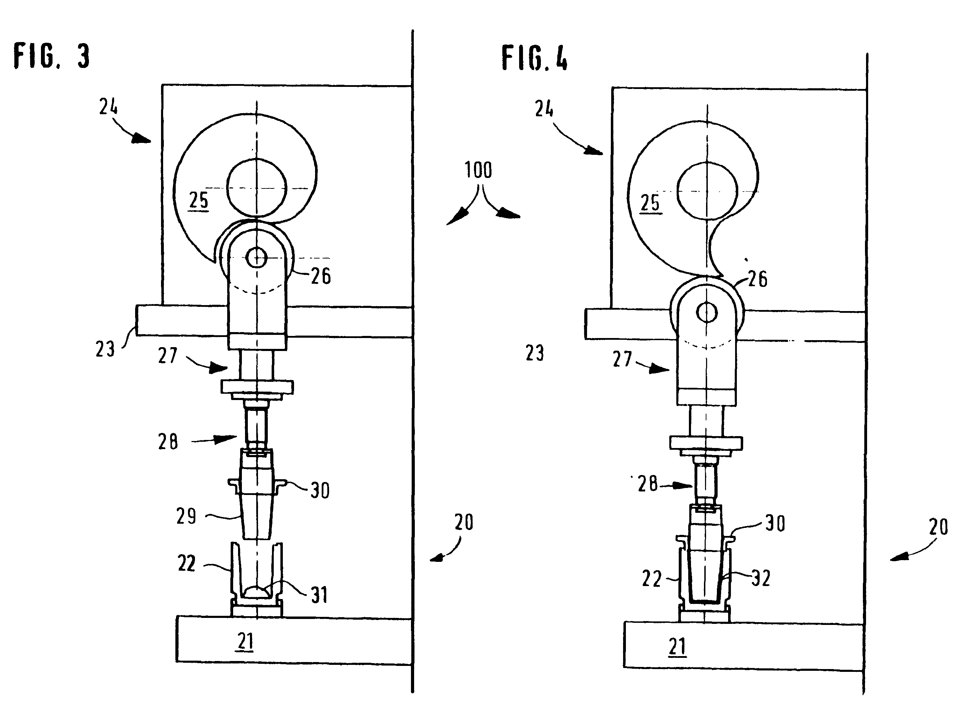

Wenn im Folgenden "oben" bzw. "unten" die Rede ist, so beziehen sich die Angaben auf die in Fig. 3 und 4 dargestellte, aufrechte Betriebsweise der Glaspreßvorrichtung.

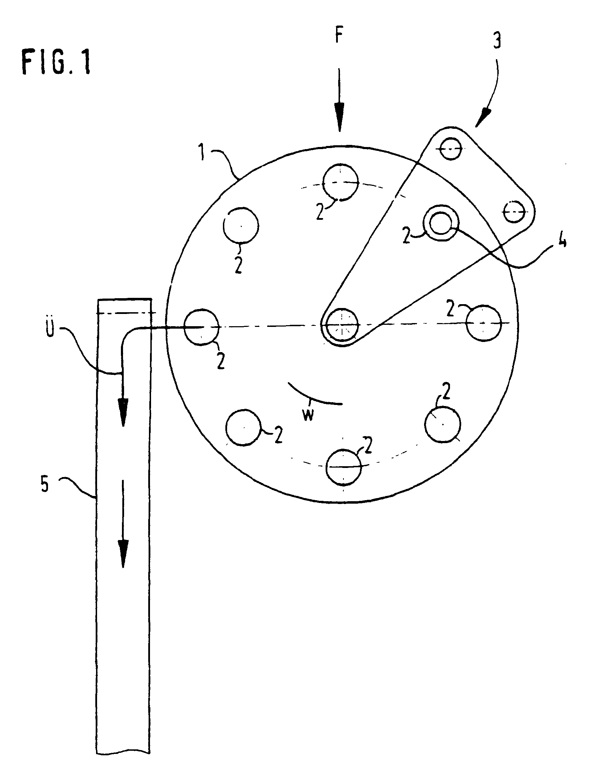

Zur Anwendung des in Fig. 1 dargestellten, herkömmlichen Verfahrens findet ein drehbarer Maschinentisch 1 Verwendung, welcher acht Preßformen 2 umfaßt. Der Winkelabstand w benachbarter Preßformen 2 beträgt jeweils 45°.

Zur Herstellung eines Glasformlings wird in einem ersten Arbeitsschritt mit Hilfe eines in der Zeichnung nicht dargestellten Feeders eine abgeteilte Menge schmelzflüssigen Glases in eine der Preßformen eingegeben. Dieser Einfüllvorgang ist in Fig. 1 durch einen mit F bezeichneten Pfeil symbolisiert. Nach Abschluß des Einfüllvorganges F wird der Maschinentisch um den Winkelabstand w im Uhrzeigersinn gedreht, so daß die zuvor gefüllte Preßform 2 derart in einer in Fig. 1 nur angedeuteten Glaspreßvorrichtung 3 positioniert wird, daß deren Preßstempel 4 in die Preßform 2 hineindrückbar ist und den aus der Zeichnung nicht erkenntlichen Glasformling ausformt. Während dieses Preßvorganges wird die - in Drehrichtung des Maschinentischs 1 gesehen - nachfolgende Preßform 2, die sich nun unter dem Feeder befindet, wiederum in dem Einfüllvorgang F mit schmelzflüssigem Glas versehen. Nach Ablauf der für die vollständige Ausformung des Glasformlings nötigen Preßzeit $t_p$, die - je nach Glasformling und eingesetztem Glasmaterial - im Bereich von einigen Sekunden liegt, wird der Preßstempel 4 aus der Preßform 2 zurückgezogen und durch eine erneute Drehung des Maschinentisches 1 im Uhrzeigersinne um den Winkelabstand w die zuvor mit schmelzflüssigem Glas gefüllte Preßform 2 unter den Preßstempel verlagert.

Zur Abkühlung des zuvor ausgepreßten Glasformlings bis zum vollständigen Erstarren verbleibt dieser bei dem in Fig. 1 dargestellten Beispiel für ein herkömmliches Glaspreßverfahren für die Dauer von vier weiteren Zyklen in der Preßform 2, bevor eine Übergabe Ü an ein Transportband 5 erfolgt.

Im Folgenden soll an einem Beispiel die Leistungsfähigkeit dieses herkömmlichen, mit einem Achtformen-Maschinentisch und einer Einstempelpreßvorrichtung arbeitenden Verfahrens berechnet werden. Die im Folgenden beispielhaft angenommene Preßzeit $t_p$ von 2 s ist für einen Glasformling mit einer Wandstärke von 10 mm realistisch. Wie eingangs bereits erläutert, gilt für die Abkühldauer $t_p$:

$$t_k = (z - 1)t_p + zt_T,$$

wobei z die Anzahl der Zyklen, $t_p$ die Preßdauer sowie $t_T$ die Zeit, die der Drehtisch zur Drehung um einen den Abstand benachbarter Preßformen entsprechenden Winkelabstand benötigt, bedeuteten. Der Einfachheit halber sei angenommen, daß $t_T$ = 1 s ist. Es ergibt sich daher bei dem vorliegenden Beispiel für einen Glasformling eine Kühlzeit $t_k$ - 13 s Zusammen mit der zur Ausformung des Glasformlings benötigten Preßzeit von $t_p$ = 2 s verstreicht also eine Zeit von 15 s vom Beginn des Preßvorgangs bis zur Übergabe des Preßformlings an das Transportband. Da bei dem dieser Rechnung zugrundeliegenden Verfahren nach dem eigentlichen Preßvorgang fünf Winkeldrehungen des Maschinentisches erfolgen, bis der Glasformling dem Transportband übergeben wird, befinden sich zeitgleich fünf Glasformlinge in Preßformen des Maschinentisches. Insgesamt ergibt sich daraus eine Produktion von zwanzig Glasformlingen pro Minute.

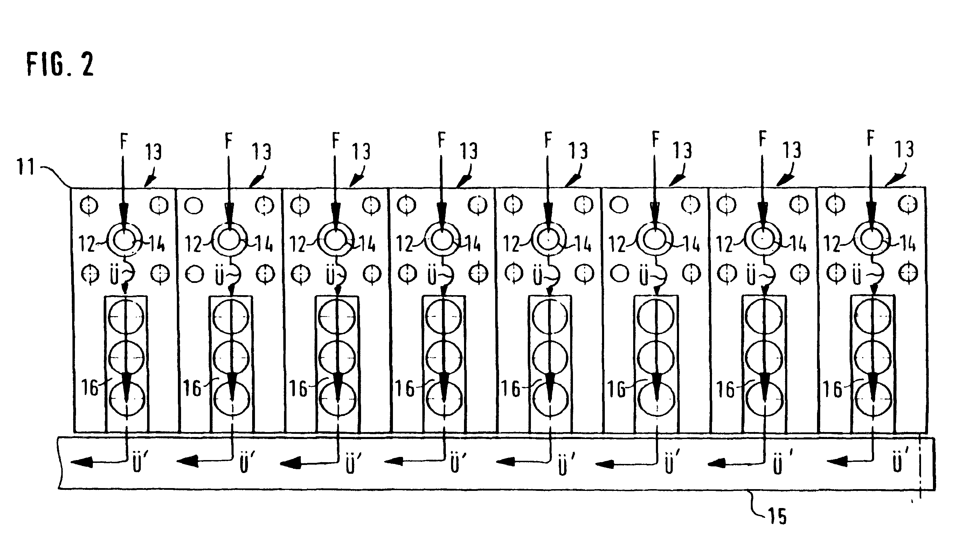

In Fig. 2 ist in einer Fig. 1 entsprechenden Darstellungsweise der Ablauf des erfindungsgemäßen Verfahrens am Beispiel einer Vorrichtung erläutert, welche einen linearen, acht Preßformen 12 aufweisenden Maschinentisch 11 sowie eine acht Preßstempel 14 umfassende Glaspreßvorrichtung 13 aufweist.

Bei dem erfindungsgemäßen Verfahren findet das Einfüllen F der abgeteilten Menge des schmelzflüssigen Glases in die Preßformen 12 statt, bevor die Preßformen dem Maschinentisch 11 mit Hilfe einer in der Zeichnung nicht dargestellten Einrichtung zugeführt und übergeben werden. Nach der Übergabe werden zeitgleich die acht Preßstempel 14 in die Preßformen 12 hineingedrückt und solange in Kontakt mit dem Glasformling in der Preßform belassen, bis sich dieser zumindest in seinen oberflächennahen Bereichen auf eine solche Temperatur abgekühlt hat, daß er zur Entnahme aus der Preßform und zur Übergabe an eine Kühlstation ausreichende Formsteifigkeit aufweist. Bei einem Preßformling, der entsprechend dem anhand von Fig. 1 erläuterten Beispiel, eine Glaswandstärke von 10 mm aufweist, beträgt die hierzu erforderliche Zeit durch die zusätzliche Wärmeabfuhr über den Preßstempel nur noch 7 s Nach dieser Preßzeit $t_p$, die nun gleichsam die Kühlzeit $t_k$ umfaßt, findet die Übergabe Ü des Preßformlings an eine Kühlstation 16 statt, welche die Temperatur des Glas formlings weiter absenkende und vergleichmäßigende Kühlformen, die in der Zeichnung nicht dargestellt sind, umfaßt. In der Kühlstation wird der Glasformling bis zu seinem vollständigen Erstarren abgekühlt. Er wird dann in einem weiteren Übergabeschritt Ü' einem Transportband 15 übergeben.

Im Folgenden soll die Leistungsfähigkeit dieses Verfahrens bei dem anhand von Fig. 2 erläuterten Ausführungsbeispiel bestimmt werden. Wie bereits erwähnt, beträgt die Preß- bzw. Kühlzeit $t_p$ bzw. $t_k$, die der gesamten Verweildauer des Glasformlings in der entsprechenden Preßform 12 entspricht, 7 s. In Analogie zu dem anhand von Fig. 1 erläuterten Verfahren soll die Transportzeit zur Übergabe Ü des Glasformlings an die Kühlstation 1 s betragen. Insgesamt vergehen bei dem erfindungsgemäßen Verfahren demnach 8 s, bis eine Preßform für ein erneutes Einfüllen F einer abgeteilten Menge schmelzflüssigen Glases zur Verfügung steht. Mit jeder der Preßformen lassen sich daher im Mittel 7,5 Glasformlinge pro Minute erzeugen, woraus sich eine Gesamtmenge bei Verwendung von acht Formen und acht Preßstempeln von 60 Glasformlingen pro Minute ergibt.

Der Vergleich dieser beiden Verfahren zeigt sehr deutlich die höhere Leistungsfähigkeit, die mit dem erfindungsgemäßen Verfahren bei einer gleichen Anzahl von Preßformen erzielbar ist.

Anhand von Fig. 3 und 4 soll nun im Folgenden eine Glaspreßvorrichtung für die Anwendung des erfindungsgemäßen Verfahrens erläutert werden.

Die Glaspreßvorrichtung 100 umfaßt ein in der Zeichnung nicht genauer dargestelltes Gestell 20, von welchem ein Pressentisch 21 vorkragt, dessen Oberfläche in einer horizontalen Ebene liegt. Der Pressentisch 21 trägt auf seiner Oberseite eine Preßform 22. Oberhalb des Pressentisches 21 ist an dem Gestell 20 ein feststehender Ausleger 23 angebracht, welcher auf seiner Oberseite den Pressenantrieb 24 trägt.

Der Pressenantrieb 24 umfaßt eine von einem in der Zeichnung nicht dargestellten Drehstrom-Servomotor angetriebene Kurvenscheibe 25, welche auf eine Rolle 26 wirkt, die am oberen Ende einer in dem Ausleger 23 in Richtung ihrer Längsachse verschiebbar gelagerten Preßstange 27 angebracht ist. Die Preßstange 27 weist an ihrem unteren Ende eine Schnellwechseleinrichtung 28 auf, mittels welcher ein das Gegenstück zu der jeweiligen Preßform 22 bildender Preßstempel 29 an der Preßstange 27 befestigbar ist. An dem Preßstempel 29 ist in seinem oberen Bereich ein radial überstehender Ring 30 vorgesehen, welcher beim "Pressen auf Anschlag" den Anschlag bildet, so daß das zwischen der inneren Oberfläche der Preßform 22 und der äußeren Oberfläche des Preßstempels 29 verbleibende freie Volumen, in welches eine in der Preßform 22 befindliche Menge schmelzflüssigen Glases 31 hineingepreßt wird und die Gestalt und Wandstärken des Glasformlings 32 bestimmt, fest vorgegeben ist.

Meist variiert die mittels des Feeders einer Preßform 22 zugegebene, abgeteilte Glasmenge jedoch für die Anwendung des Verfahrens "Pressen auf Anschlag" zu stark, so daß die Mengenunterschiede, die zu geringfügigen Unterschieden in den Wandstärken der Glasformlinge führen, beim Pressen ausgeglichen werden müssen. Das Pressen erfolgt dann nach dem Verfahren des "anschlaglosen Pressens" mit einem bestimmten Preßdruck, d.h. der Preßstempel 29 wird mittels der Kurvenscheibe 25 mit einer vorbestimmbaren Endkraft in die Preßform 22 hineingedrückt.

In Fig. 3 ist die Glaspreßvorrichtung in einem Betriebszustand vor dem Pressen des Glasformlings dargestellt. Wie aus Fig. 4 ersichtlich, wird mit Hilfe des in der Zeichnung nicht dargestellten Drehstrom-Servomotors die Kurvenscheibe 25 im Uhrzeigersinn gedreht, wobei durch ihre Exzentrizität die Preßstange 27 nach unten verlagert wird und somit den Preßstempel 29 soweit in die Preßform 22 hineindrückt, bis der Ring 30 auf der Oberseite der Preßform 22 anschlägt. Während dieses Preßvorgangs tritt in dem zwischen dem Preßstempel und der Preßform 22 verbleibenden Zwischenraum das schmelzflüssige Glas ein, welches nach dem Erstarren den Glasformling 32 bildet. Das Zurückziehen des Preßstempels 29 aus der Preßform 22 nach Abschluß des Preßvorganges erfolgt nach dem Weiterdrehen der Kurvenscheibe 25 in ihre Ausgangslage durch eine in der Zeichnung nicht dargestellte Einrichtung. Diese kann aus einem elastischen Element, einem Gegengewicht, einem hydraulisch oder pneumatisch angetriebenen Zylinder oder aus einer Gegenkurvenscheibe bestehen.

## Patentansprüche

1. Verfahren zur Herstellung von Glasformlingen nach dem Preßverfahren, bei dem in einer Preßstation schmelzflüssiges Glas mittels eines die innere Form des Glasformlings vorgebende Preßform hineingepreßt und nach dem Erstarren entnommen wird, wobei

    der Preßstempel (14) nach dem Preßvorgang nur solange in Kontakt mit dem Glasformling in der Preßform (12) verweilt und dabei Wärme sowohl von der Innenseite als auch von der Außenseite des Glasformlings abgeführt wird, bis dieser sich in seinen oberflächennahen Bereichen auf eine solche Temperatur abgekühlt hat, daß er eine zur Entnahme aus der Preßform (12) und zur Übergabe an eine Kühlstation (16) ausreichende Formsteifigkeit aufweist und daß der Glasformling einer eine Wiederaufheizung über die Erstarrungstemperatur verhindernde Kühlstation und in der Kühlstation (16) in eine seine Temperatur weiter absenkende und vergleichmäßigende Kühlform übergeben wird.

2. Verfahren nach Anspruch 1, **dadurch gekennzeichnet, daß** zeitparallel in mehreren Preßformen (12) mit einer entsprechenden Anzahl von Preßstempeln (14) aus schmelzflüssigem Glas Glasformlinge gepreßt und den Kühlstationen (16) übergeben werden.

3. Glaspreßvorrichtung (100) zur Herstellung von Glasformlingen (32) nach einem Verfahren gemäß einem der Ansprüche 1 oder 2,

mit mindestens einer Preßstation, welche eine die äußere Gestalt des Glasformlings vorgebende Preßform (22) umfaßt, in welche eine abgeteilte Menge schmelzflüssigen Glases (31) eingebbar und mittels eines die innere Form des Glasformlings (32) vorgebenden Preßstempels (29) zu dem Glasformling verpreßbar ist,

mit einem Krafterzeuger, mittels dessen der Preßstempel (29) in die Preßform (22) nach einer vorgegebenen zeitlichen Abhängigkeit von Kraft und Vorschub hineindrückbar ist,

mit einer Einrichtung zum Zurückziehen des Preßstempels nach erfolgtem Preßvorgang

und mit Mitteln zur Entnahme des Glasformlings aus der Preßform, wobei

die Glaspreßvorrichtung Mittel zur Übergabe des Glasformlings an eine eine Wiederaufheizung über die Erstarrungstemperatur verhindernde und der Glaspreßvorrichtung nachgeschaltete Kühlstation umfaßt und

der Krafterzeuger eine von einem drehmoment- und drehzahlsteuerbaren Elektromotor angetriebene Kurvenscheibe (25) ist.

4. Vorrichtung nach Anspruch 3, **dadurch gekennzeichnet, daß** der Elektromotor ein Drehstrom-Servomotor ist.

5. Vorrichtung nach Anspruch 3 oder 4, **dadurch gekennzeichnet, daß** eine in ihrer Achsrichtung verschiebbar geführte, an ihrem einen Ende den Preßstempel (29) tragende Preßstange (27) vorgesehen ist, gegen deren anderes Ende die Kurvenscheibe (25) wirkt.

6. Vorrichtung nach Anspruch 5, **dadurch gekennzeichnet, daß** die Einrichtung zum Zurückziehen des Preßstempels eine auf die Preßstange (27) wirkende Gegenkurvenscheibe ist.

7. Vorrichtung nach Anspruch 5, **dadurch gekennzeichnet, daß** die Einrichtung zum Zurückziehen des Preßstempels ein die Preßstange (27) entgegen der Preßrichtung kraftbeaufschlagendes elastisches Element ist.

8. Vorrichtung nach Anspruch 7, **dadurch gekennzeichnet, daß** das elastische Element mindestens eine Schraubenfeder umfaßt.

**Claims**

1. Process for producing glass mouldings by the pressing process in which molten glass is pressed in a pressing station into a mould which determines the internal shape of the glass moulding and is removed after setting, in which
the punch (14) dwells in the mould (12) after the pressing process only so long in contact with the glass moulding and thereby heat is conducted away both from the inside and also from the outside of the glass moulding, until the latter has cooled in the regions of it near its surface to such a temperature that it has sufficient stability of shape for removal from the mould (12) and transfer to a cooling station (16) and that the glass moulding is transferred to a cooling station which prevents re-heating above the setting temperature, and in the cooling station (16) into a cooling mould of matching shape further reducing its temperature.

2. Process according to claim 1, **characterised in that** simultaneously glass mouldings of molten glass are pressed in a number of moulds (12) using a corresponding number of punches (14) and then transferred to the cooling stations (16).

3. Glass moulding equipment (100) for producing glass mouldings (32) by a process according to one of claims 1 or 2,
with at least one pressing station which comprises a mould (22) determining the external shape of the glass moulding, and into which a metered quantity of molten glass (31) is introduced and pressed to form the moulding by means of a punch (29) which determines the internal shape of the moulding (32),
with a force generator, by means of which the punch (29) is introduced into the mould (22) in accordance with a predetermined time dependency of force and displacement,
with a device for withdrawing the punch on completion of the pressing process,
and with means for removing the glass moulding from the mould, in which
the glass moulding equipment includes means for transferring the moulding to a cooling station which prevents re-heating above the setting temperature and which follows the glass moulding equipment and
the force generator is a cam (25) driven by an electric motor of controllable torque and speed.

4. Equipment according to claim 3, **characterised in that** the electric motor is a three-phase servo-motor.

5. Equipment according to claim 3 or 4, **characterised**

**in that** a press ram (27) is provided, guided to be displaceable in the direction of its length and carrying the punch (29) on its one end, and against the other end of which the cam (25) acts.

6. Equipment according to claim 5, **characterised in that** the device for retracting the punch is an opposing cam acting on the ram (37).

7. Equipment according to claim 5, **characterised in that** the device for retracting the punch is an elastic element applying a force to the ram (27) in a direction opposite to the direction of pressing.

8. Equipment according to claim 7, **characterised in that** the elastic element comprises at least one coil spring.


**Revendications**

1. Procédé de fabrication de pièces moulées en verre selon le procédé par compression, dans lequel du verre en fusion est comprimé dans une station de pressage au moyen d'un moule représentant la forme intérieure de la pièce moulée en verre et après solidification elle en est extraite,
dans lequel

après l'opération de compression, le poinçon (14) ne demeure en contact avec la pièce moulée en verre dans le moule (12) et donc de la chaleur est évacuée aussi bien du côté intérieur que du côté extérieur de la pièce moulée en verre, que le temps nécessaire pour que la pièce en verre soit refroidie dans ses zones superficielles, à une température telle qu'elle ait une rigidité de forme suffisante pour le retrait du moule (12) et pour le transfert à une station de refroidissement (16) et
la pièce de verre moulée est transférée à une station de refroidissement empêchant un réchauffage au-dessus de la température de solidification et dans la station de refroidissement (16) la pièce est mise dans un moule de refroidissement réduisant à nouveau sa température et l'homogénéisant.

2. Procédé selon la revendication 1,
**caractérisé en ce qu'**
on comprime simultanémentdes pièces moulées en verre de fusion dans plusieurs moules (12) avec un nombre correspondant de poinçons (14) et on les transfere dans des stations de refroidissement (16).

3. Dispositif de compression de verre (100) pour fabriquer des pièces de verre moulées (32) selon un procédé conforme à une des revendications comprenant,

- au moins une station de pressage que comporte un moule (22) donnant la forme extérieure de la pièce moulée en verre, moule dans lequel on peut introduire un lot de verre en fusion (31) et qu'on peut soumettre à un pressage au moyen d'un poinçon (29) reproduisant la forme intérieure de la pièce de verre (32) pour obtenir la pièce moulée en verre,
- un générateur de force, au moyen duquel le poinçon (29) peut être engagé dans le moule (22) selon une fonction de force et d'avancement préfixée dans le temps,
- un mécanisme pour le retrait du poinçon après avoir réalisé l'opération de compression, et
- des moyens pour enlever du moule la pièce moulée en verre,

procédé dans lequel

- le dispositif de compression du verre comporte des moyens pour transférer la pièce moulée en verre dans une station de refroidissement empêchant un réchauffage au-dessus de la température de solidification, en aval du dispositif de pressage du verre et
- le générateur de force est une came (25) mue par un moteur électrique pouvant régler un couple de rotation et une vitesse de rotation.

4. Dispositif selon la revendication 3,
**caractérisé en ce que**
le moteur électrique est un servomoteur à courant alternatif.

5. Dispositif selon la revendication 3 ou 4,
**caractérisé en ce qu'**
est prévue une barre de pressage (27) guidée mobile dans le sens de son axe, portant à une de ses extrémités le poinçon (29), son autre extrémité étant soumise à l'action d'un disque de came (25).

6. Dispositif selon la revendication 5,
**caractérisé en ce que**
le mécanisme de retrait du poinçon est une contre-came agissant sur la barre de pressage (27).

7. Dispositif selon la revendication 5,
**caractérisé en ce que**
le dispositif de retrait du poinçon est un élément élastique sollicitant la barre de pressage (27) par une force de sens oppose au sens de pressage.

8. Dispositif selon la revendication 7,
**caractérisé en ce que**
l'élément élastique comprend au moins un ressort hélicoïdal.

FIG.1

FIG. 2

EP 0 767 760 B2

FIG. 3

FIG. 4